# EUROPEAN PATENT APPLICATION

(11) **EP 4 555 973 A1**
(43) Date of publication of application: **21.05.2025**
(21) Application number: 23827181.1
(22) Date of filing: 20.06.2023
(51) Int. Cl.: A61C 17/06, A61C 1/08, A61C 17/08, F21V 8/00, F21W 131/202, F21Y 115/10, F21Y 115/30

(54) **INTRA-ORAL SUCTION DEVICE**

(30) Priority: 21.06.2022 JP 2022109332; 01.08.2022 JP 2022130282; 21.09.2022 JP 2022162788
(71) Applicant: Uji, Hideyo, Chuo-ku Tokyo 1040061 (JP)
(72) Inventor: Uji, Hideyo, Chuo-ku Tokyo 1040061 (JP)
(74) Representative: Müller, Enno
(86) International application number: PCT/JP2023/022689
(87) International publication number: WO 2023/248998

(57) **Abstract**

An oral suction device includes a vacuum hose connected to a suction source, a vacuum tip having a tube body that has a proximal end connectable to a distal end of the vacuum hose and a distal end as a suction port, and a bag-shaped light source holder provided on a tube-body outer surface, on a tube-body inner surface, or in a tube wall of the vacuum tip or at locations corresponding to a combination thereof, extending along a longitudinal direction of the vacuum tip, and having an opening at one end.

## Description

### Technical field

The present invention relates to an oral suction device having a vacuum tip.

### Background art

In dentistry, a suction device is used which sucks and removes unnecessary substances in an oral cavity with a suction tool attached to a distal end of a vacuum hose. Primary distal-end suction tools are a saliva ejector that sucks liquid (saliva, blood, or water) only and a vacuum tip that can suck both liquid and solid (fragments or the like of a tooth or metal fallen into the oral cavity).

The oral suction device is required to have a practical illumination function. In a case of using a general operating light, a cutting handpiece or a mirror held by a dentist or a suction vacuum tip held by an assistant casts a shadow when entering an oral cavity that is a narrow space. Therefore, illumination of an affected area needs to be performed so as to avoid the cutting handpiece and the vacuum tip, and an angle needs to be adjusted each time the angle of the mouth of a patient changes even a little. In particular, it is difficult for light from the operating light to reach a root canal orifice of a distal buccal root or a mesiobuccal root in a maxillary molar part.

Hence, inventions related to an oral device having an illumination function in place of a general operating light have been made (see Patent Literatures 1 to 4).

Patent Literatures 1 to 3 disclose methods of guiding light guided to the proximal end of a vacuum tip by an optical fiber or the like into the oral cavity by a light guide member provided on the vacuum tip. However, using the optical fiber or providing the light guide member increases the development cost. Therefore, as an option related to the configuration that can reduce the development cost, it can be considered to install one or more light sources connected to a power supply with a lead wire on a portion of the vacuum tip which is to be inserted into the oral cavity.

Meanwhile, since several hundred or more kinds of bacteria live in the oral cavity and various kinds of bacteria causing diseases live and grow therein, it is also demanded in dental treatment that a portion of the oral suction device which is to be inserted into the oral cavity of a patient is detachable and can be sterilized or replaced with a new one. Further, if the light source and the wire themselves can be detached from the vacuum tip, it is no longer necessary to consider the water resistance and the heat resistance of the light source, an electrically connecting portion, and the lead wire when the vacuum tip is washed. On the other hand, in a case where it is not expected to wash the light source and the wire themselves by using water and heat, they are required to be designed so as not to allow saliva or the like in the oral cavity to adhere thereto.

### Citation List

### Patent Literatures

Patent Literature 1: U.S. Patent No. 5931670
Patent Literature 2: Japanese Patent Application National Publication No. 2002-506676
Patent Literature 3: Japanese Patent Application Laid-open No. 2005-177143
Patent Literature 4: Japanese Patent Application National Publication No. 2010-514532

### Summary

### Technical Problem

An object of the present invention is to provide an oral suction device that allows a light source unit including a light source and a portion of a lead wire connected to the light source to be installed in a detachable manner on a vacuum tip side of the oral suction device which is to be inserted into the oral cavity.

### Solution to Problem

In order to solve the above problems, the present invention provides the following configurations.
1) An aspect of the present invention provides an oral suction device comprising:
   a vacuum hose connected to a suction source;
   a vacuum tip having a tube body that has a proximal end connectable to a distal end of the vacuum hose and a distal end as a suction port;
   a bag-shaped light source holder provided on a tube-body outer surface, on a tube-body inner surface, or in a tube wall of the vacuum tip or at locations corresponding to a combination thereof, extending along a longitudinal direction of the vacuum tip, and having an opening at an end closer to the proximal end of the vacuum tip;
   a light source as illumination in an oral cavity; and
   a power-supply lead wire connected to the light source, wherein
   the light source and a portion of the lead wire are able to be inserted into and taken out of the light source holder through the opening.
2) In the above aspect, one or more of the light source holders are provided on the tube-body outer surface of the vacuum tip.
3) In the above aspect, at least one of the light source holders of the vacuum tip includes a branching portion arranged near the opening and extending away from the tube-body outer surface of the vacuum tip.
4) In the above aspect, the light source holder includes a C-shaped holder clip fitting to an outer peripheral surface of the vacuum tip.
5) In the above aspect, the oral suction device further comprises an approximately C-shaped holder clip configured to surround the vacuum tip and the light source holder positioned on or in the vacuum tip.
6) In the above aspect, a valve is provided at the opening of the light source holder.
7) In the above aspect, the oral suction device further comprises:
   a hose-side electrode provided in the vicinity of the distal end of the vacuum hose; and
   a tip-side electrode provided in the opening of the light source holder for receiving power from the hose-side electrode, wherein
   the lead wire is configured by a first lead wire electrically connecting a power supply and the hose-side electrode to each other and a second lead wire electrically connecting the light source and the tip-side electrode to each other,
   a portion of the lead wire which is to be inserted into and taken out of the light source holder is the second lead wire, and
   in a state where connection between the vacuum tip and the vacuum hose has been completed, the tip-side electrode and the hose-side electrode are positioned to be in contact with each other and become electrically continuous.
8) In the above aspect, the oral suction device further comprises an attachment having a tube body that has a proximal end connectable to the distal end of the vacuum hose and a distal end connectable to the proximal end of the vacuum tip.
9) In the above aspect, one or more of the light source holders are provided on the tube-body outer surface of the vacuum tip.
10) In the above aspect, at least one of the light source holders of the vacuum tip includes a branching portion arranged near the opening and extending away from the tube-body outer surface of the vacuum tip.
11) In the above aspect, the light source holder includes a C-shaped holder clip fitting to an outer peripheral surface of the vacuum tip, and by fitting the holder clip to the vacuum tip, the light source holder is provided on the outer peripheral surface of the vacuum tip.
12) In the above aspect, the oral suction device comprises a holder clip having an inner frame with a shape obtained by cutting a portion of an annular shape that fits to an outer frame formed by the vacuum tip and the light source holder positioned on or in the vacuum tip, wherein
   by fitting the light source holder and the vacuum tip through the cut portion, the light source holder is provided on the outer peripheral surface of the vacuum tip.
13) In the above aspect, a valve is provided at the opening of the light source holder.
14) In the above aspect, the oral suction device further comprises:
   an attachment-side electrode provided in the vicinity of the distal end of the attachment; and
   a tip-side electrode provided in the opening of the light source holder for receiving power from the attachment-side electrode, wherein
   the lead wire is configured by a first lead wire electrically connecting a power supply and the attachment-side electrode to each other and a second lead wire electrically connecting the light source and the tip-side electrode to each other,
   a portion of the lead wire which is to be inserted into and taken out of the light source holder is the second lead wire, and
   in a state where connection between the vacuum tip and the attachment has been completed, the tip-side electrode and the attachment-side electrode are positioned to be in contact with each other and become electrically continuous.
15) In the above aspect, the oral suction device further comprises a plate-shaped sheet where the light source and the lead wire are arranged, wherein
   the light source holder has a bag shape to which the sheet is able to be inserted and fit.
16) In the above aspect, the oral suction device further comprises a plate-shaped sheet where the light source and the lead wire are arranged, wherein
   the sheet is provided with a plug connected via a cable to the lead wire arranged thereon or therein,
   the vacuum hose includes a plug receiver to which the plug is insertable, and
   the light source holder has a bag shape to which the sheet is able to be inserted and fit.
17) In the above aspect, the oral suction device further comprises a plate-shaped sheet where the light source and the lead wire are arranged, wherein
   the sheet is provided with a plug connected via a cable to the lead wire arranged thereon or therein,
   the attachment includes a plug receiver to which the plug is insertable, and
   the light source holder has a bag shape to which the sheet is able to be inserted and fit.

### Advantageous Effects of Invention

With the configuration of an oral suction device according to the present invention, only a vacuum tip can be washed while a light source unit including a light source and a portion of a lead wire connected to the light source is detached.

### Brief Description of Drawings

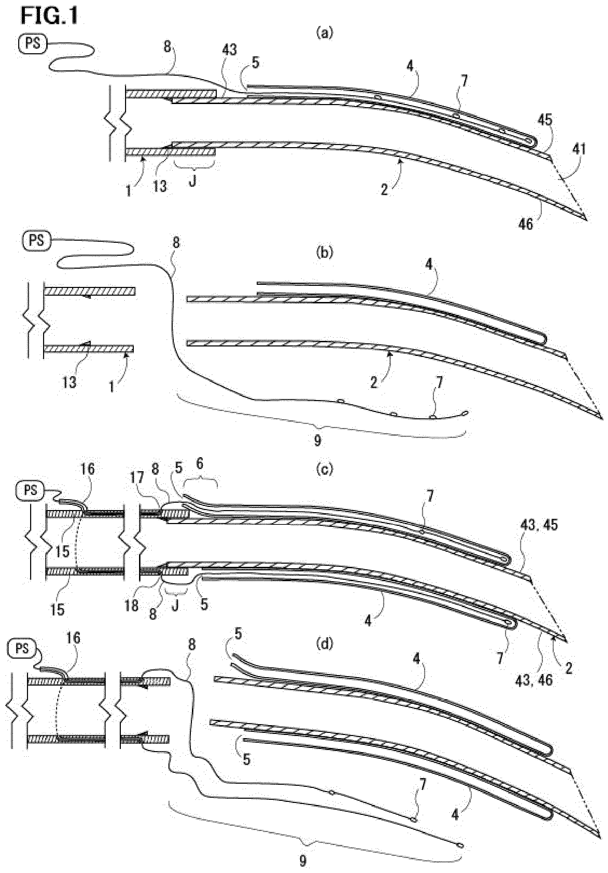

Fig. 1(a) is a schematic cross-sectional view of an oral suction device according to the present invention, (b) is a schematic cross-sectional view in a state where constituent elements are separated from each other, (c) is a schematic cross-sectional view of an oral suction device in a modification, and (d) is a schematic cross-sectional view in a state where the constituent elements are separated from each other.

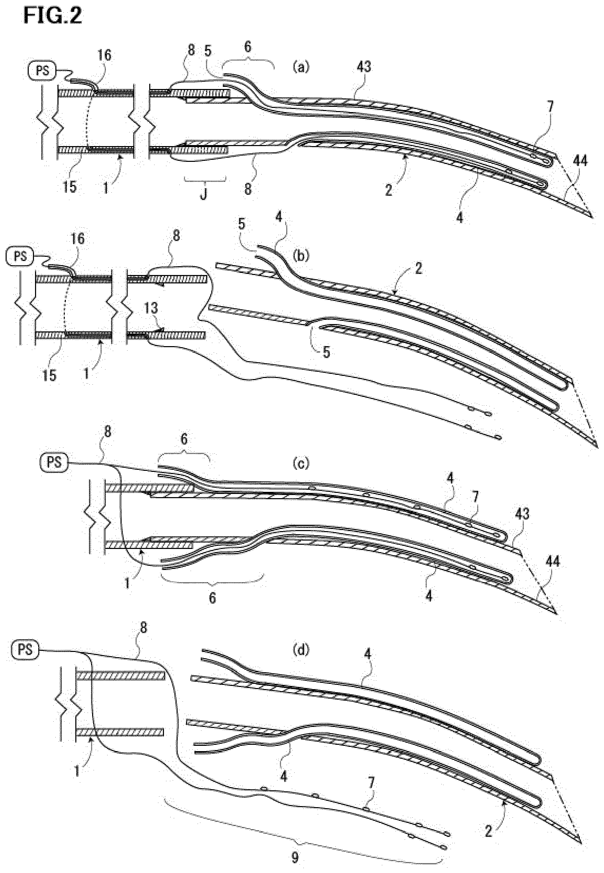

Fig. 2(a) is a schematic cross-sectional view of an oral suction device according to a modification, (b) is a schematic cross-sectional view in a state where constituent elements are separated from each other, (c) is a schematic cross-sectional view of an oral suction device in another modification, and (d) is a schematic cross-sectional view in a state where the constituent elements are separated from each other.

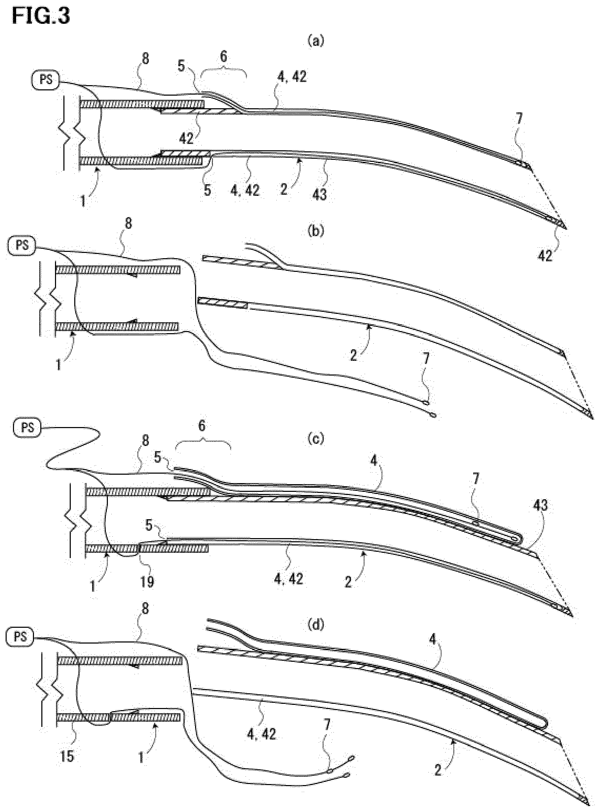

Fig. 3(a) is a schematic cross-sectional view of an oral suction device according to a modification, (b) is a schematic cross-sectional view in a state where constituent elements are separated from each other, (c) is a schematic cross-sectional view of an oral suction device in another modification, and (d) is a schematic cross-sectional view in a state where the constituent elements are separated from each other.

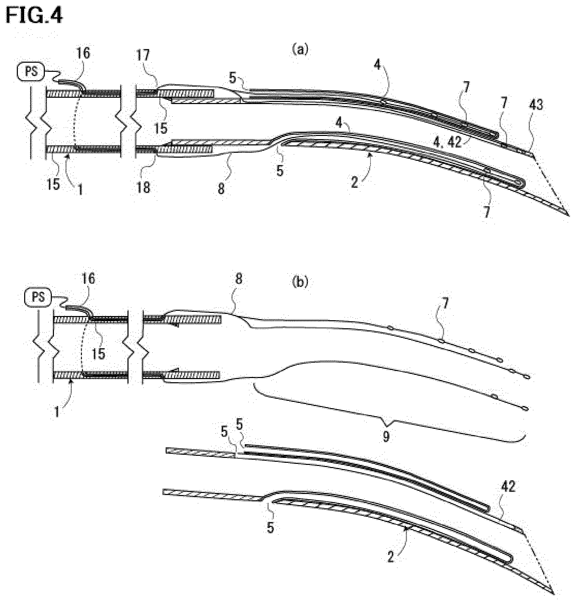

Fig. 4(a) is a schematic cross-sectional view of an oral suction device according to a modification and (b) is a schematic cross-sectional view in a state where constituent elements are separated from each other.

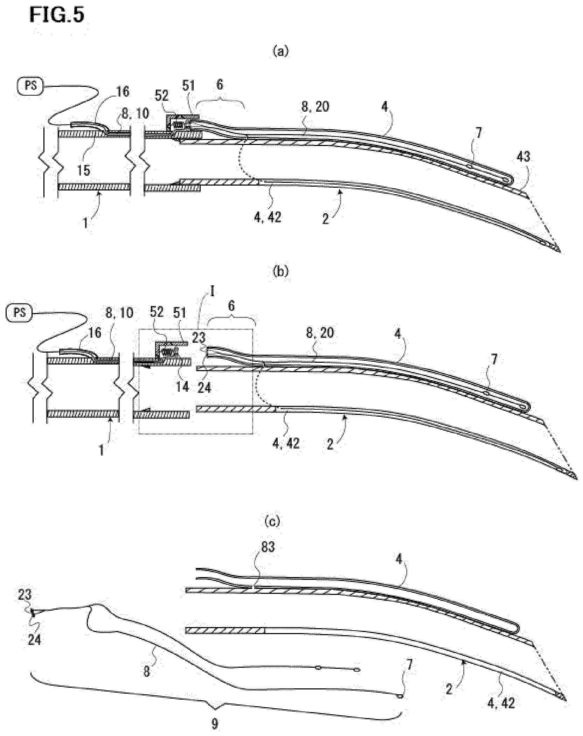

Fig. 5(a) is a schematic cross-sectional view of an oral suction device including a contact structure of a hose-side electrode and a tip-side electrode, (b) is a schematic cross-sectional view in a state where a vacuum tip is detached from a vacuum hose, and (c) is a schematic cross-sectional view in a state where a light source unit is detached from the vacuum tip.

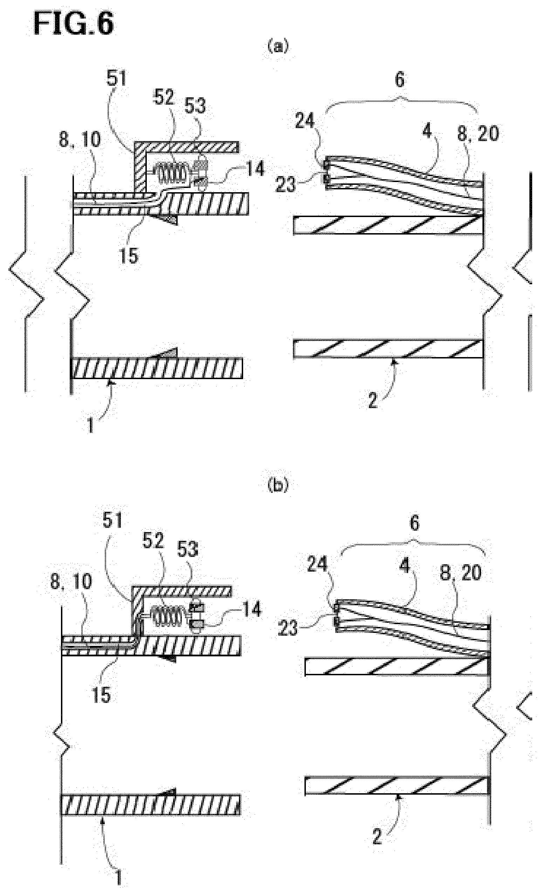

Figs. 6(a) and (b) are schematic enlarged cross-sectional views of a region I in Fig. 5(b), where (a) and (b) are schematic cross-sectional views of different wiring examples.

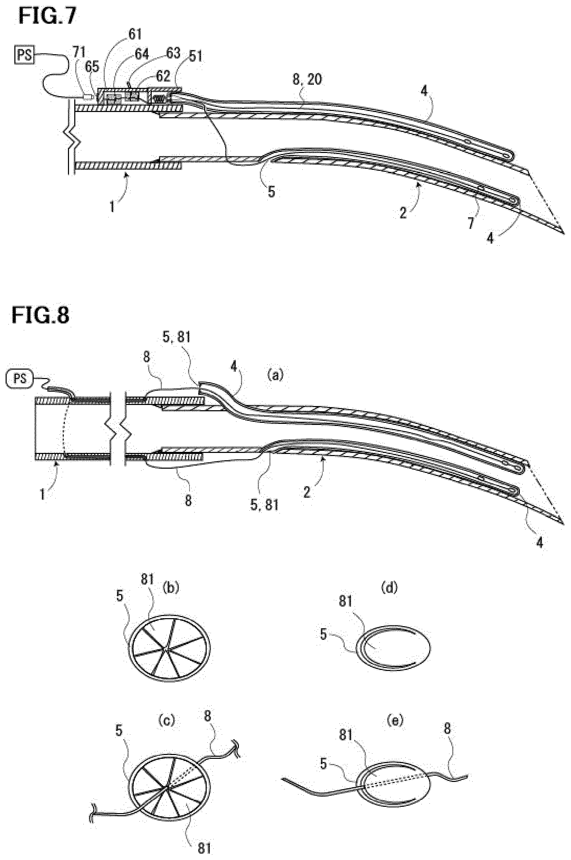

Fig. 7 is a schematic cross-sectional view of an oral suction device including a controller and a battery as well as a contact structure of the hose-side electrode and the tip-side electrode.
Fig. 8(a) is a schematic cross-sectional view of an oral suction device including a valve, (b) is a schematic front view illustrating an exemplary shape of the valve, (c) is a schematic diagram illustrating a state where a lead wire passes through the valve illustrated in (b), (d) is a schematic front view illustrating another exemplary shape of the valve, and (e) is a schematic diagram illustrating a state where the lead wire passes through the valve illustrated in (d).

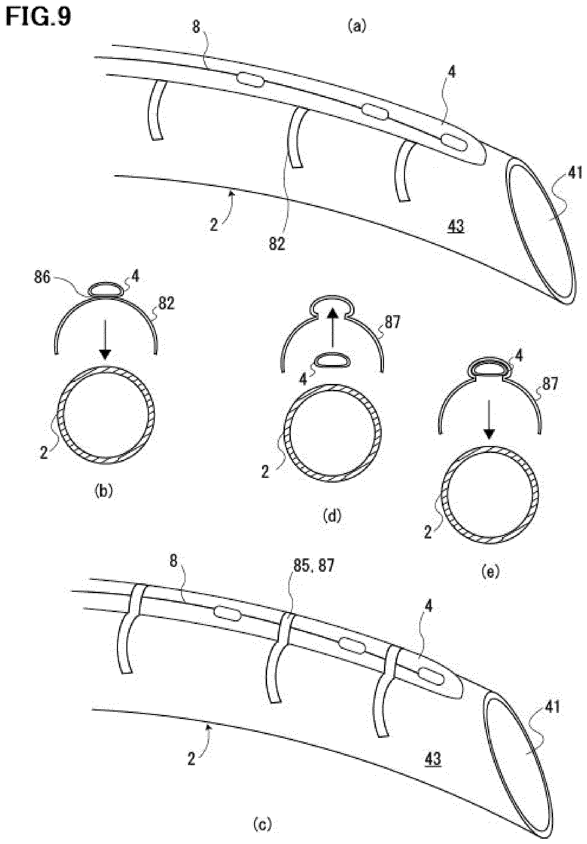

Fig. 9(a) is a schematic perspective view illustrating a state where a holder clip is used to install a light source holder on the vacuum tip, (b) is a schematic cross-sectional view when viewed from the distal end side of the vacuum tip before attachment of the holder clip, (c) is a schematic perspective view illustrating a state where another holder clip is used, and (d) and (e) are schematic cross-sectional views from the same viewpoint as (b) illustrating an attachment process of the holder clip.

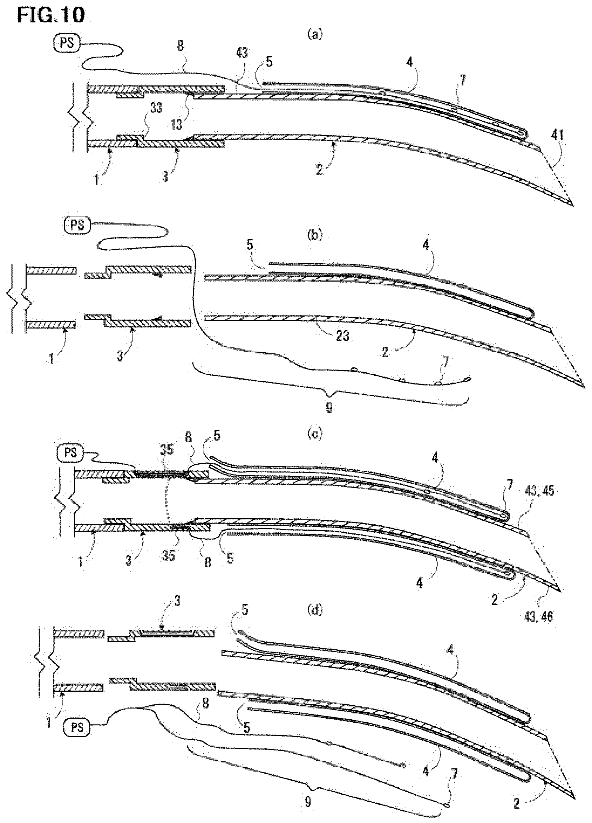

Fig. 10(a) is a schematic cross-sectional view of an oral suction device according to another embodiment including an attachment, (b) is a schematic cross-sectional view in a state where constituent elements are separated from each other, (c) is a schematic cross-sectional view of an oral suction device in a modification, and (d) is a schematic cross-sectional view in a state where the constituent elements are separated from each other.

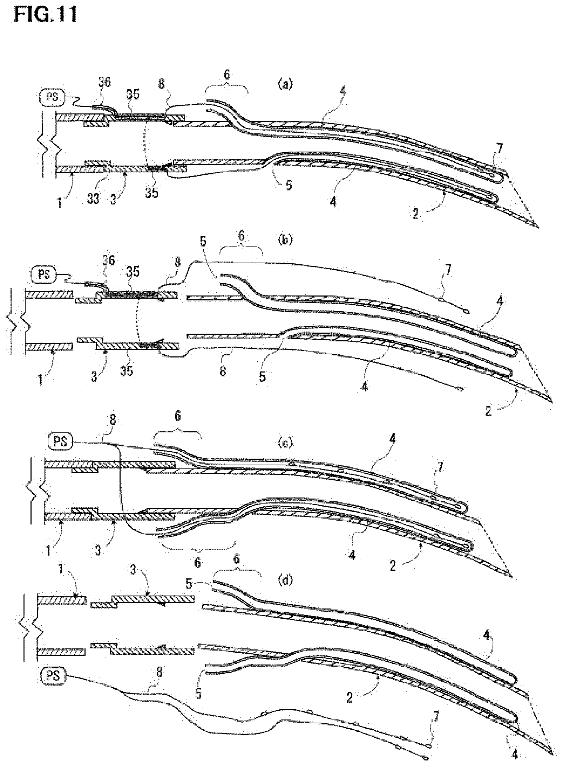

Fig. 11(a) is a schematic cross-sectional view of an oral suction device according to a modification, (b) is a schematic cross-sectional view in a state where constituent elements are separated from each other, (c) is a schematic cross-sectional view of an oral suction device in another modification, and (d) is a schematic cross-sectional view in a state where the constituent elements are separated from each other.

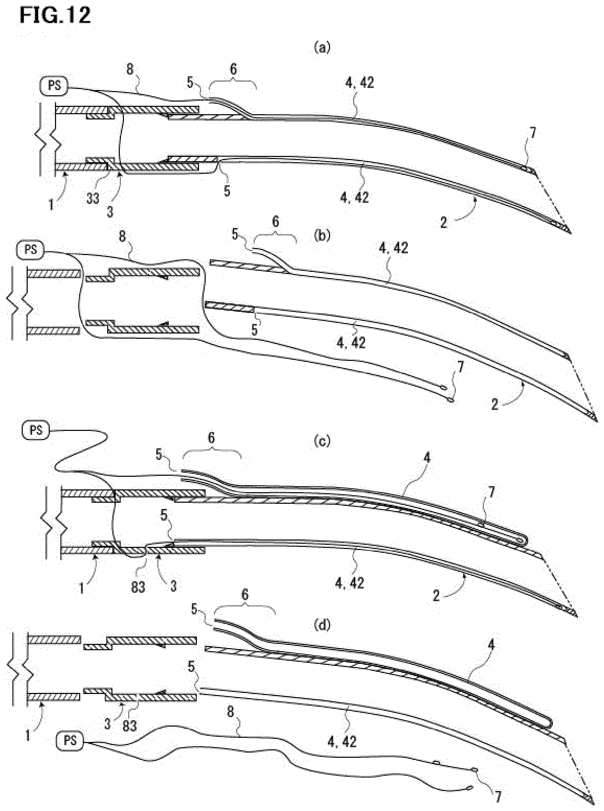

Fig. 12(a) is a schematic cross-sectional view of an oral suction device according to a modification, (b) is a schematic cross-sectional view in a state where constituent elements are separated from each other, (c) is a schematic cross-sectional view of an oral suction device in another modification, and (d) is a schematic cross-sectional view in a state where the constituent elements are separated from each other.

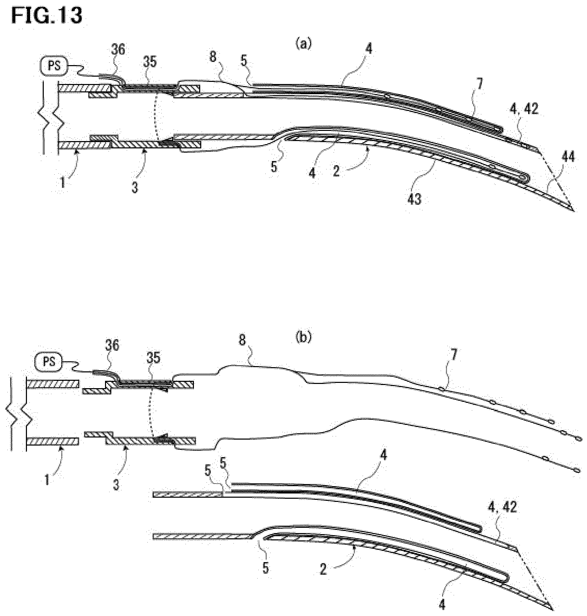

Fig. 13(a) is a schematic cross-sectional view of an oral suction device according to a modification and (b) is a schematic cross-sectional view in a state where constituent elements are separated from each other

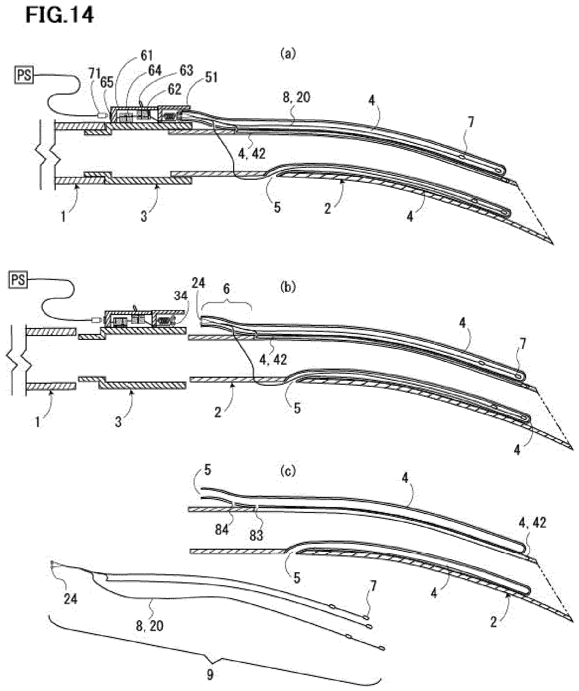

Fig. 14(a) is a schematic cross-sectional view of an oral suction device including a contact structure of an attachment-side electrode and a tip-side electrode, (b) is a schematic cross-sectional view in a state where the attachment is detached from the vacuum hose and the vacuum tip is detached from the attachment, and (c) is a schematic cross-sectional view in a state where a light source unit is detached from the vacuum tip.

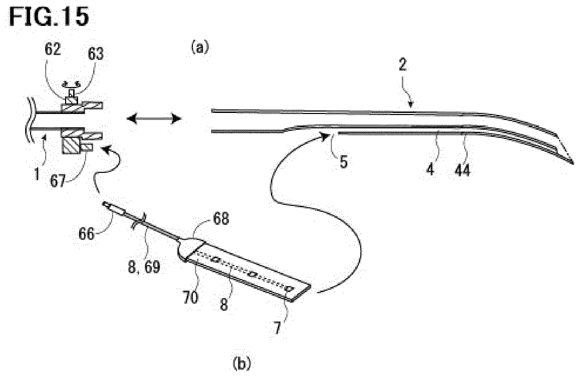

Fig. 15(a) is a schematic cross-sectional view of an oral suction device including a light source holder into which a sheet is inserted and to be fit thereto, and (b) is a schematic perspective view illustrating the sheet to be inserted and fit to the light source holder.

### Description of Embodiments

Embodiments of the present invention will be described below with reference to the drawings illustrating examples. In the drawings, like or similar constituent elements in the respective embodiments are basically denoted by like reference signs. As for like or similar constituent elements already described in another embodiment, explanations thereof are omitted in some cases.

### (1) First embodiment

A first embodiment is described with reference to Figs. 1 to 9.

Figs. 1 are schematic cross-sectional views of an oral suction device. This section is a longitudinal section appearing when a vacuum tip 2 and a vacuum hose 1 are cut in almost half along the longitudinal direction thereof (same applies to the following similar drawings).

Hereinafter, as for the vacuum tip 2, the vicinity of the end to be connected to the vacuum hose 1 is referred to as "proximal end", and the vicinity of the opposite end is referred to as "distal end". As for the vacuum hose 1, the vicinity of the suction-source side end is referred to as "proximal end", and the vicinity of the end to be connected to the vacuum tip 2 is referred to as "distal end" (same applies to the following embodiments).

A basic configuration of the oral suction device according to the present invention is described with reference to Figs. 1. The oral suction device includes the vacuum tip 2 having a rigid tube body and the vacuum hose 1 that is flexible. The proximal end of the vacuum hose 1 is connected to a suction source (not illustrated) such as an exhaust pump. The inside of the tube bodies of the vacuum tip 2 and the vacuum hose 1 connected to each other serves as a path for a sucked object.

A general material for the vacuum tip 2 is plastic, such as polypropylene, or metal. A material for the vacuum hose 1 is soft polyvinyl chloride, silicone rubber, and polyurethane resin, for example.

As illustrated in Fig. 1(a), the vacuum hose 1 and the vacuum tip 2 are connected to each other by inserting the proximal end of the vacuum tip 2 to the distal end of the vacuum hose 1. An overlapping portion with a predetermined length (e.g., 1 to 2 cm) of the vacuum tip 2 and the vacuum hose 1, generated by the above insertion, is referred to as a joint portion J.

As illustrated in Fig. 1(a), the end of insertion of the vacuum tip 2 into the vacuum hose 1 may be a stopper 13 that is a projection provided on the inner surface of the vacuum hose 1. The inner diameter of the vacuum tip 2 and the outer diameter of the vacuum tip 2 may be designed to stop insertion at a certain length. It is desirable that, in a state where the vacuum tip 2 and the vacuum hose 1 are connected to each other, friction between their contact surfaces prevent easy separation of them from each other.

This insertion makes the internal spaces of them communicate with each other. A suction port 41 is provided at the distal end of the vacuum tip 2. An operator holds the vacuum tip 2 near the proximal end thereof by hand, moves the vacuum tip 2 in the oral cavity, and performs suction.

In the example of Figs. 1, the tube body of the vacuum tip 2 is partially curved from the proximal end to the distal end. The length from the proximal end to the distal end of the vacuum tip 2 is approximately 10 to 15 cm, for example. The vacuum tip 2 may be a tube body curved as a whole, a straight tube body, or a tube body bent in the middle at 90° or an obtuse angle. The shape of a cross-section perpendicular to the longitudinal direction of the tube body is normally substantially circular or substantially elliptical.

In the illustrated example, the suction port 41 has a shape obtained by cutting the distal end of the tube body diagonally with respect to the longitudinal direction. The vacuum tip 2 is normally used with the side on which the suction port 41 opens facing a suction target. Therefore, a convex curved surface on the side on which the suction port 41 opens serves as a work surface 45, and a concave curved surface on the opposite side serves as a non-work surface 46. In another example, a rubber tip may be mounted in the suction port 41.

In the following descriptions, the upward direction at the viewpoint in Fig. 1(a) is referred to as a work-surface side, and the downward direction is referred to as a non-work-surface side.

The oral suction device according to the present invention is used with a light source 7 as an illumination in the oral cavity installed on or in the vacuum tip 2. In particular, it is preferable to illuminate the work surface 45 and/or the surrounding portion of the suction port 41. However, the range of illumination is not limited thereto. The oral suction device can be configured to illuminate all around the vacuum tip 2 including the non-work-surface side.

The light source 7 is mainly a light-emitting diode (LED). An element that generates less heat, such as an LED, is preferable.

As illustrated in Fig. 1(a), the light source 7 is connected by a lead wire 8 for power supply electrically connected to a power supply PS.

The number of light sources 7 connected to one lead wire is one or multiple. It is preferable to provide the light source 7 with a sufficient luminous intensity or the sufficient number of light sources 7 for illumination for work in the oral cavity.

Even in a case where the illustration includes only one lead wire 8 in each drawing, a positive-side lead wire and a negative-side lead wire are included actually.

The oral suction device of the present invention includes a light source holder 4 for installing the light source 7. The shape of the light source holder 4 extends along the longitudinal direction of the vacuum tip 2 and has a bag shape opening at one end closer to the proximal end of the vacuum tip 2. This opening is referred to as an opening 5. Further, the light source holder 4 needs to be made of a light-transmitting material at least near the light source 7. However, the entire light source holder 4 may be made of a light-transmitting material. In a case where the vacuum tip 2 is made of a light-transmitting material, it is preferable that the light source holder 4 is the same as the vacuum tip 2 in material. The material for the light source holder 4 is plastic such as polypropylene.

In a case where the light source holder 4 is provided within a tube wall 42, the light source holder 4 is formed integrally when the vacuum tip 2 is fabricated, for example, molded.

In a case where the light source holder 4 is provided on a tube-body outer surface 43 or a tube-body inner surface 44, the light source holder 4 may be formed integrally when the vacuum tip 2 is fabricated, or may be fabricated separately from the vacuum tip 2 and then installed on or in the vacuum tip 2.

The installation location of the light source holder 4 may be on the tube-body outer surface 43 of the vacuum tip 2 as illustrated in Figs. 1, on the tube-body inner surface 44 as illustrated in Figs. 2(a) and (b), within the tube wall 42 as illustrated in Figs. 3(a) and (b), or locations corresponding to a combination of them as illustrated in Figs. 2(c) and (d), Figs. 3(c) and (d), or Figs. 4.

It is preferable that at least one light source holder 4 is installed on the tube-body outer surface 43, in particular, on the work-surface side.

While the above descriptions present a basic configuration of the oral suction device in common in the present embodiment, further detailed explanations will be made below with reference to Figs. 1 to 4.

Although the light source holder 4 is provided at one location on the work surface 45 in the tube-body outer surface 43 of the vacuum tip 2 in Fig. 1(a), it may be provided at another location on the tube-body outer surface 43.

The light source 7 and a portion of the lead wire 8 connected to the light source 7 are inserted through the opening 5 of the light source holder 4, so that the state illustrated in Fig. 1(a) is realized. In the following descriptions, the light source 7 and a portion of the lead wire 8 connected to the light source 7 which are inserted into the light source holder 4 are referred to as a light source unit 9.

As illustrated in Fig. 1(b), by pulling out the light source unit 9 from the light source holder 4, the light source unit 9 can be taken out. As described above, the light source holder 4 has a configuration that allows insertion and removal of the light source unit 9 through the opening 5.

Fig. 1(c) illustrates a modification in which two light source holders 4 are provided on the vacuum tip 2. The light source holder 4 installed on the work surface 45 has a branching portion 6 arranged near the opening 5 and extending away from the tube-body outer surface 43 of the vacuum tip 2. Since the light source holder 4 includes the branching portion 6, the light source holder 4 is allowed to extend to the joint portion J. In a case where the branching portion 6 is not provided and the light source holder 4 extends to the joint portion J, when connection between the vacuum hose 1 and the vacuum tip 2 is attempted, the vacuum hose 1 and the light source holder 4 interfere with each other before the vacuum tip 2 is inserted and reaches the stopper 13.

In Fig. 1(c), a space serving as a path for the lead wire 8 is formed within a tube wall 15 of the vacuum hose 1. Holes 17 and 18 are open which penetrate from the outer peripheral surface of the vacuum hose 1 to the space in the tube wall 15. In addition, the vacuum hose 1 has a hose branching portion 16 that is a tubular projection. The inside of the hose branching portion 16 and the space in the tube wall 15 communicate with each other.

The lead wire 8 exiting from the opening 5 of the light source holder 4 provided on the work surface 45 passes through the hole 17, passes through the space in the tube wall 15 of the tube body of the vacuum hose 1, and the hose branching portion 16 and is connected to the power supply PS.

The lead wire 8 exiting from the opening 5 of the light source holder 4 provided on the non-work surface 46 passes through the hole 18, passes through the space in the tube wall 15 of the tube body of the vacuum hose 1 in the longitudinal direction and then in the tube wall 15 along the tube-body peripheral direction, passes through the hose branching portion 16, and is connected to the power supply PS. The lead wires 8 provided in the two light source holders 4 may be coupled at a location where the routes of them overlap each other.

Also in the modification of the present embodiment, as illustrated in Fig. 1(d), it is possible to detach the light source unit 9 from the vacuum tip 2 by detaching the vacuum tip 2 from the vacuum hose 1.

Fig. 2(a) illustrates a modification in which the light source holders 4 are respectively provided at two locations on the tube-body inner surface 44 of the vacuum tip 2. The light source holder 4 on the work-surface side extends on the tube-body inner surface 44 from the distal end side to the proximal end side and includes the branching portion 6 passing through the tube wall to exit to the tube-body outer surface 43 and extending away from the tube-body outer surface 43. The branching portion 6 has the opening 5 at its tip.

As illustrated in Fig. 2(a), the installation location of the light source holder 4 is not limited to a location on the work-surface side or the non-work-surface side, and may be any location on the tube-body inner surface 44.

The light source holder 4 on the non-work-surface side extends on the tube-body inner surface 44 from the distal end side to the proximal end side, passes through the tube wall to exit to the tube-body outer surface 43, and has the opening 5 in the tube-body outer surface 43.

The present modification is an example in which the number of light sources 7 installed in each light source holder 4 is two. The lead wire 8 connecting the light source 7 and the power supply PS to each other is identical to that in Fig. 1(c) in being arranged to pass within the tube wall 15 of the vacuum hose 1 and within the hose branching portion 16, and therefore descriptions thereof are omitted.

By detaching the vacuum tip 2 from the vacuum hose 1, the light source unit 9 can also be detached from the vacuum tip 2 (Fig. 2(b)).

In a case where the light source holder 4 is provided in the manner described in the present modification, not only the material for the light source holder 4 needs to be light-transmitting at least near the light source 7 but also the material for the vacuum tip 2 is required to be light-transmitting at least near the light source 7. As a result, a suction target and the area around it can be irradiated with light of the light source 7.

Fig. 2(c) illustrates a modification in which the light source holders 4 are provided on the tube-body outer surface 43 and on the tube-body inner surface 44. The light source holder 4 on the tube-body outer surface 43 has the branching portion 6 similarly to Fig. 1(c). The light source holder 4 on the tube-body inner surface 44 has the branching portion 6 similarly to Fig. 2(a). The present modification is an example in which the number of light sources installed in the light source holder 4 on the tube-body outer surface 43 is five.

The light source unit 9 can be detached by being pulled out from the light source holder 4 (Fig. 2(d)).

Fig. 3(a) illustrates a modification in which two light source holders 4 are installed within a tube wall. The present modification is an example in which each light source holder 4 includes one light source 7. The light source holder 4 on the work-surface side extends from the distal end side to the proximal end side of the vacuum tip 2 and includes the branching portion 6 passing through the tube wall and extending away from the tube-body outer surface 43, and has the opening 5 at the tip of the branching portion 6.

The light source holder 4 on the non-work-surface side extends from the distal end side to the proximal end side of the vacuum tip 2, passes through the tube wall to exit to the tube-body outer surface 43, and has the opening 5 in the tube-body outer surface 43.

As illustrated in Fig. 3(a), the installation location of the light source holder 4 is not limited to a location on the work-surface side or the non-work-surface side, and may be any location as long as the location is within the tube wall 42.

The light source unit 9 can be detached by being pulled out from the light source holder 4 (Fig. 3(b)).

Fig. 3(c) illustrates a modification in which the light source holders 4 are provided on the tube-body outer surface 43 and in the tube wall 42. In this example, the light source holder 4 on the tube-body outer surface 43 has the branching portion 6 similarly to Fig. 2(c), and the number of light sources installed therein is two.

The light source holder 4 in the tube wall 42 extends from the distal end side and has the opening 5 in the edge surface of the proximal end of the vacuum tip. In the illustrated example, the number of light sources installed therein is one. The lead wire 8 electrically connecting the light source 7 and the power supply PS to each other exits from the opening 5 of the light source holder 4, passes in the tube body of the vacuum hose 1, passes through a hole 19 penetrating from the inside of the tube body to the outside of the tube body of the vacuum hose, exits to the outside of the tube body, and is connected to the power supply.

It is possible to detach the light source unit 9 from the vacuum tip 2 by detaching the vacuum tip 2 from the vacuum hose 1 (Fig. 3(d)).

In Fig. 4(a), the light source holder 4 is provided on the tube-body outer surface 43 similarly to Fig. 1(a), the light source holder 4 is provided on the tube-body inner surface 42 as with the light source holder 4 installed on the non-work-surface side illustrated in Fig. 2(a), and the light source holder 4 is provided within the tube wall 42 as with the light source holder 4 installed on the non-work-surface side illustrated in Fig. 3(a).

In the illustrated example, four light sources 7 are installed in the light source holder 4 installed on the tube-body outer surface 43, and two light sources 7 are installed in each of the light source holder 4 installed within the tube wall 42 and the light source holder 4 installed on the tube-body inner surface 44.

The lead wire 8 connecting the light source 7 installed in the light source holder 4 installed on the tube-body inner surface 44 and the power supply PS to each other exits from the opening 5, passes through the hole 18, passes through the space in the tube wall 15 of the tube body of the vacuum hose 1, passes in the tube wall 15 along the tube-body peripheral direction, passes through the hose branching portion 16, and is connected to the power supply PS. The lead wires 8 provided in the different light source holders 4 may be coupled at a location where the routes of them overlap each other.

The lead wire 8 exiting from the opening 5 of each of the light source holders 4 installed on the tube-body outer surface 43 and within the tube wall 42 passes through the hole 17, passes through the space in the tube wall 15 of the tube body of the vacuum hose 1, and passes through the hose branching portion 16 and is connected to the power supply PS. Those lead wires 8 may be coupled at a location where their routes overlap each other.

It is possible to detach the light source unit 9 from the vacuum tip 2 by detaching the vacuum tip 2 from the vacuum hose 1 (Fig. 4(b)).

In the present embodiment, the lead wire 8 provided in the light source holder 4 installed on or in the vacuum tip 2 and electrically connected to the light source 7 and the lead wire 8 provided on the vacuum hose 1 side and electrically connected to the power supply PS may be configured to be able to be in contact with each other via electrodes thereof or separated from each other (Figs. 5).

As illustrated in Fig. 5(b), the oral suction device includes tip-side electrodes 24 at the opening 5 of the light source holder 4 and hose-side electrodes 14 in the vicinity of the distal end of the vacuum hose 1. These electrodes 14 and 24 are in contact with each other in the state where the vacuum tip 2 is connected to the vacuum hose 1 (Fig. 5(a)).

The lead wire 8 electrically connecting the power supply PS and the hose-side electrodes 14 to each other is referred to as a first lead wire 10, and the lead wire electrically connecting the light source 7 and the tip-side electrodes 24 to each other is referred to as a second lead wire 20. A portion of the lead wire 8 which is inserted into the light source holder 4 is the entire second lead wire 20, and in the example of Fig. 5(b), the light source unit 9 is configured by the light source 7 and the second lead wire 20.

The branching portion 6 is provided similarly to Fig. 1(c) to prevent interference of the tip-side electrodes 24 with the distal end of the vacuum hose 1 when connection between the vacuum tip 2 and the vacuum hose 1 is attempted.

Further, to prevent the hose-side electrodes 14 from being exposed, the hose-side electrodes 14 are preferably surrounded by a connection box 51 so as not to prevent contact with the tip-side electrodes 24.

Figs. 6(a) and (b) are schematic enlarged cross-sectional views of a region I in Fig. 5(b).

The hose-side electrodes 14 configured by a positive electrode and a negative electrode are provided on a plate 53. The plate 53 is connected to the connection box 51 via an elastic body 52. At the viewpoint in Fig. 6(a), it is desirable that the plate 53 moves only left and right and the movement in other directions is prevented by the connection box 51. To achieve this purpose, the sizes of the connection box 51 and the plate 53 are designed. It is desirable that the materials and the shapes of the plate 53 and the connection box 51 are designed so as to allow the plate 53 to smoothly move left and right. The plate 53 is made of a non-conducting material.

Similarly, the tip-side electrodes 24 are configured by a positive electrode and a negative electrode. These electrodes are arranged on an opening plate 23. The opening plate 23 has a shape that can cover the opening 5 or be fit to the opening 5. It is preferable that the opening plate 23 is fixed to the opening 5, and the tip-side electrodes 24 arranged on the opening plate 23 are also fixed. The opening plate 23 may have a ridge or a groove, the opening 5 may have a groove or a ridge, and the opening plate 23 may be screwed to the opening 5. As illustrated in Fig. 5(c), no matter which shapes the opening 23 and the opening 5 have, the opening plate 23 needs to be detachable from the opening 5. By detaching the opening plate 23 from the opening 5, it is possible to take the light source unit 9 out of the light source holder 4.

Similarly to the plate 53, the opening plate 23 is made of a non-conducting material. The hose-side electrodes 14 and the tip-side electrodes 24 are positioned in such a manner that, in a state where connection between the vacuum hose 1 and the vacuum tip 2 has been completed, the positive electrodes of these electrodes 24 and 14 are in contact with each other and become electrically continuous, and the negative electrodes of them are in contact with each other and become electrically continuous. Due to the contact and the electrical continuity, the tip-side electrodes 24 and the light source 7 can receive power from the hose-side electrodes 14 electrically connected to the power supply PS.

The vicinity of the distal end of the vacuum hose 1 where the hose-side electrodes 14 are installed is a location where the contact and the electrical continuity described above are realized.

The elastic body 52 is provided to be able to maintain contact between the hose-side electrodes 24 and the tip-side electrodes 14 even when slight misalignment occurs in connection between the vacuum hose 1 and the vacuum tip 2. Therefore, the length of the elastic body 52 is designed in such a manner that the elastic body 52 shrinks by a certain length in a state where the vacuum hose 1 and the vacuum tip 2 are connected to each other. The plate 53 is biased by the elastic body 52 toward the distal end of the vacuum hose 1, so that contact between the hose-side electrodes 14 and the tip-side electrodes 24 is maintained.

A wiring example of the hose-side electrodes 14 is illustrated in Figs. 6(a) and (b). In Fig. 6(a), the hose-side electrodes 14 are fixed to the plate 53 in a mode in which the hose-side electrodes 14 penetrate through the plate 53, and are connected to the first lead wire 10 on surfaces of the hose-side electrodes 14 which are exposed to the elastic body 52 side of the plate 53. The first lead wire 10 passes through a space formed in the tube wall of the vacuum hose 1, passes through the hose branching portion 16 as illustrated in Fig. 5(b), and is wired to the power supply PS.

In Fig. 6(b), the lead wire 8 and the hose-side electrodes 14 are connected to each other via the elastic body 52 that is a conductor. In this case, contact between the elastic body 52 and the first lead wire 10 can be avoided. Further, separate elastic bodies 52 are connected to the positive electrode and the negative electrode of the hose-side electrodes 14, respectively. These elastic bodies 52 are arranged not to be in contact with each other.

The first lead wire 10 connected at one end of the elastic body on the opposite side to the plate 53 passes through a space formed in the wall of the connection box 51, passes through a space within the tube wall 15 of the vacuum hose 1, and is wired to the power supply PS. The first lead wire 10 may be designed to only pass through the tube wall 15 of the vacuum hose 1 without passing within the wall of the connection box 51.

Wiring other than the wiring around the hose-side electrodes 14 and the tip-side electrodes 24 is identical to the wiring described above, and therefore descriptions thereof are omitted.

In the present embodiment, the oral suction device according to the present invention may include a controller 62 including a switch that turns on and off the power supply of the light source 7, on the outer surface of the vacuum hose 1, as illustrated in Fig. 7. The controller 62 is accommodated in a housing 61 not to be exposed to the surrounding environment. The controller 62 can also have a function of adjusting the illumination intensity.

An operator switches on and off of the power supply by operating a switch operating unit 63. As the switch operating unit 63, various types including a button type, a lever type, and the like can be installed.

The oral suction device can include the controller 62, the housing 61, and the operating unit 63 without including the hose-side electrodes 14, the tip-side electrodes 24, the connection box 51, and the like described above. In any configuration, the lead wire 8 and the light source 7 connected thereto can be attached to and detached from the vacuum tip 2.

In the present embodiment, the power supply may be a battery or a rechargeable battery 64. The battery or the rechargeable battery 64 can be accommodated in the housing 61 as illustrated in Fig. 7, if such a battery is small. The battery or the rechargeable battery 64 may be incorporated into the controller.

In a case of a rechargeable battery, a socket 65 for inserting a charging cable may be provided on the surface of the housing 61 on the closer side to the proximal end of the vacuum hose 1, for example. By inserting a connector 71, for example, a USB connector to the socket 65, it is possible to charge the rechargeable battery from the power supply PS.

In the present embodiment, a valve 81 can be provided at the opening 5 of the light source holder 4 so as to prevent entrance of saliva or the like into the opening 5 of the light source holder 4 while the oral suction device is used.

For example, as illustrated in Fig. 8(a), the valve 81 can be provided at the opening 5. The shape of the valve 81 can be substantially circular by arranging a plurality of fan-shaped portions on the circumference as illustrated in Fig. 8(b), for example. In this case, as illustrated in Fig. 8(c), the lead wire 8 can pass through the central portion of the valve.

In another modification, most of the opening 5 can be covered with a single valve 81 (Fig. 8(d)), and the lead wire 8 can pass through a cut portion of the valve 81 (Fig. 8(e)).

The valve 81 itself is preferably made of a soft material, considering insertion and removal of the light source 7 and the lead wire 8. The material for the valve 81 may be the same as the material for the vacuum tip 2. In a case where the light source holder 4 is fabricated integrally with the vacuum tip 2, the valve 81 may also be fabricated integrally therewith.

An example of how to attach the light source holder 4 to the tube-body outer surface 43 in a case where the light source holder 4 is not formed integrally with the vacuum tip 2 is described with reference to Figs. 9. Typically, as illustrated in Figs. 9, holder clips 82 and 87 are used which sandwich the vacuum tip 2 therebetween.

Fig. 9(b) is a schematic cross-sectional view when viewed from the distal end side of the vacuum tip 2.

As illustrated in Fig. 9(b), the holder clip 82 has a C-shape elastically fitting to the outer peripheral surface of the vacuum tip 2, is joined to the light source holder 4 at a joint surface 86, and is configured as a portion of the light source holder 4. When the holder clip 82 fitting to the vacuum tip 2 is elastically deformed and fit to the vacuum tip 2, the light source holder 4 is attached to the vacuum tip 2. The attached state is illustrated in Fig. 9(a).

The inner surface of the holder clip 82 fitting to the vacuum tip 2 is designed to have a larger curvature than the outer surface of the vacuum tip 2. With this design, it is possible to prevent easy fall of the holder clip 82 from the vacuum tip 2.

The holder clip 87 illustrated in Figs. 9(d) and (e) is different from the holder clip 82 in Fig. 9(b) and has a configuration in which the joint surface 86 to the light source holder 4 is not provided, and the holder clip 87 clips the light source holder 4 and the vacuum tip 2 together. Therefore, the holder clip 87 has an approximately C-shape that surrounds the vacuum tip 2 and the light source holder 4 positioned on the vacuum tip **2.**

For example, first, the light source holder 4 is provided to be fit to the inside of the holder clip 87 as illustrated in Fig. 9(d), and then the vacuum tip 2 is fit to the inside of the holder clip 87 as illustrated in Fig. 9(e). The light source holder 4 is thus provided and fixed onto the outer peripheral surface of the vacuum tip 2. The state where the light source holder 4 is attached to the vacuum tip 2 is illustrated in Fig. 9(c).

Similarly to the holder clip 82 in Fig. 9(b), the shape of the holder clip 87 is designed so as not to easily fall from the vacuum tip 2 by elastic force closing the holder clip 87 in the direction of bringing the holder clip 87 into contact with the vacuum tip 2 in Fig. 9(d).

Attaching the light source holder 4 to the vacuum tip 2 is not limited to the method of using the holder clip 87. For example, the holder clip 87 illustrated in Fig. 9(c) may be changed to an adhesive holder tape 85, and the vacuum tip 2 and the light source holder 4 may be sealed together.

In a case where the light source holder 4 is not formed integrally with the vacuum tip 2, also when the light source holder 4 is attached onto the tube-body inner surface 44, the holder tape 85 may be used to fix the light source holder 4 onto the tube-body inner surface 44.

### (2) Second embodiment

A second embodiment is described with reference to Figs. 10 to 14. The main difference between the second embodiment and the first embodiment is that the second embodiment includes an attachment 3.

A basic configuration of the attachment 3 is described with reference to Fig. 10(a).

The attachment 3 has a tube body having a proximal end connectable to the distal end of the vacuum hose 1 and a distal end connectable to the proximal end of the vacuum tip 2. The tube body is preferably substantially cylindrical. It suffices that the material for the tube body is the same as the material for the vacuum tip 2 and is, for example, plastic or metal.

As for the attachment 3, the vicinity of the end to be connected to the distal end of the vacuum hose 1 is referred to as "proximal end", and the vicinity of the opposite end to be connected to the proximal end of the vacuum tip 2 is referred to as "distal end".

As illustrated in Fig. 10(a), in connection between the vacuum tip 2 and the attachment 3, a design may be employed in which the vacuum tip 2 is inserted into the attachment 3 until the vacuum tip 2 comes into contact with the stopper 13 that is a projection provided in the tube body of the attachment 3. Alternatively, a design may be employed in which, by adjustment of the outer diameter of the vacuum tip 2 and the inner diameter of the attachment 3, the vacuum tip 2 is prevented from being inserted into the attachment 3 beyond a desired depth and prevented from easily falling from the attachment 3 by friction at that position.

As illustrated in Fig. 10(a), in connection between the vacuum hose 1 and the attachment 3, a design may be employed in which a step 33 provided in the tube body of the attachment 3 stops insertion of the attachment 3 into the vacuum hose 1. Similar to connection between the vacuum tip 2 and the attachment 3, the depth of insertion may be designed by adjustment of the outer diameter of the attachment 3 and the inner diameter of the vacuum hose 1.

The oral suction device thus connected sucks an object to be sucked from the suction port 41, and uses the inside of the tube bodies of the vacuum tip 2, the attachment 3, and the vacuum hose 1 as a path for the sucked object.

An advantage of including the attachment 3 in the oral suction device is that, when an existing vacuum hose 1 is used, use of the attachment 3 matching the diameter of the existing vacuum hose 1 enables the vacuum tip 2 according to the present invention to be attached via the attachment 3.

The connection box 51 including the hose-side electrodes 14, the elastic body 52, and the like described above, the controller 62 including a switch, a rechargeable battery, or the like can be provided on this attachment (Fig. 14(a)). In this case, it is unnecessary to attach these components to the existing vacuum hose 1, and the advantage of including the attachment 3 becomes larger.

The modifications illustrated in Figs. 10 to 13 correspond to Figs. 1 to 4 in the first embodiment in which the attachment 3 is not included, and therefore common descriptions thereof are omitted except for the presence or absence of the attachment 3 and the wiring around the attachment 3.

Fig. 10(a) illustrates an example in which the light source holder 4 is provided on the tube-body outer surface 43 of the vacuum tip 2 and is not different except that the oral suction device includes the attachment 3. Therefore, descriptions of the light source 7, the lead wire 8, the light source unit 9, the light source holder 4, the power supply PS, and the like are omitted.

Also in a case where the oral suction device includes the attachment 3, the oral suction device allows each of the vacuum hose 1, the attachment 3, the vacuum tip 2, and the light source unit 9 to be separated from the device (Fig. 10(b)).

Similarly to Fig. 1(c), Fig. 10(c) illustrates an example in which the light source holders 4 are installed on the work surface 45 and the non-work surface 46 in the tube-body outer surface 43 of the vacuum tip 2.

The lead wire 8 exiting from the opening 5 of the light source holder 4 on the work surface 45 passes through a space in the tube wall 35 of the attachment 3 and is connected to the power supply PS. A configuration identical to the hose branching portion 16 provided in the vacuum hose 1 in Fig. 1(c) may be provided in the attachment 3, although not illustrated.

The lead wire 8 exiting from the opening 5 of the light source holder 4 on the non-work surface 46 passes through a space in the tube wall 35 of the tube body of the attachment 3, further passes within the tube wall 35 along the tube-body peripheral direction, enters to the route of the lead wire 8 installed in the light source holder 4 on the work surface 45, and is connected to the power supply PS. The lead wire 8 on the work surface 45 and the lead wire 8 on the non-work surface 46 may be coupled to each other at a location where the routes thereof overlap each other.

As illustrated in Fig. 10(d), the oral suction device allows each of the vacuum hose 1, the attachment 3, the vacuum tip 2, the lead wire 8 connected to the power supply PS, and the light source 7 connected to the lead wire 8 to be separated from the device. In a case of washing the vacuum tip 2 only, it suffices to separate the attachment 3 and the light source unit 9 from the vacuum tip 2, and it is therefore unnecessary to separate all the components.

Other explanations are the same as those explained with reference to Fig. 1(c), and therefore explanations thereof are omitted.

Similarly to Fig. 2(a), Fig. 11(a) illustrates an example in which the light source holders 4 are installed on the work-surface side and the non-work-surface side on the tube-body inner surface 44 of the vacuum tip 2.

The wiring of the lead wire 8 exiting from the opening 5 of the light source holder 4 on the work-surface side and the lead wire 8 exiting from the opening 5 of the light source holder 4 on the non-work-surface side is identical to that in Fig. 10(c), and therefore explanations thereof are omitted.

As illustrated in Fig. 11(b), the oral suction device allows the attachment 3 and the light source unit 9 to be separated from the vacuum tip 2.

Other explanations are the same as those explained with reference to Fig. 2(a), and therefore explanations thereof are omitted.

Similarly to Fig. 2(c), Fig. 12(c) illustrates an example in which the light source holders 4 are installed on the work surface 45 in the tube-body outer surface 43 of the vacuum tip 2 and on the non-work-surface side on the tube-body inner surface 44.

As illustrated in Fig. 12(d), the oral suction device allows each of the vacuum hose 1, the attachment 3, the vacuum tip 2, the lead wire 8 connected to the power supply PS, and the light source 7 connected to the lead wire 8 to be separated from the device.

Other explanations are the same as those explained with reference to Fig. 2(c), and therefore explanations thereof are omitted.

Similarly to Fig. 3(a), Fig. 12(a) illustrates an example in which the light source holders 4 are installed on the work-surface side and the non-work-surface side in the tube wall 42 of the vacuum tip 2.

As illustrated in Fig. 12(b), the oral suction device allows each of the vacuum hose 1, the attachment 3, the vacuum tip 2, the lead wire 8 connected to the power supply PS, and the light source 7 connected to the lead wire 8 to be separated from the device.

Other explanations are the same as those explained with reference to 3(a), and therefore explanations thereof are omitted.

Similarly to Fig. 3(c), Fig. 12(c) illustrates an example in which the light source holders 4 are installed on the work surface 45 in the tube-body outer surface 43 of the vacuum tip 2 and the non-work-surface side in the tube wall 42.

In the present modification, the lead wire 8 exiting from the opening 5 of the light source holder 4 in the tube wall 42 passes through a hole 83 penetrating from the inside of the tube body of the attachment 3 to the outside of the tube body, exits to the outside of the tube body of the attachment 3, and is connected to the power supply.

As illustrated in Fig. 12(d), the oral suction device allows each of the vacuum hose 1, the attachment 3, the vacuum tip 2, the lead wire 8 connected to the power supply PS, and the light source 7 connected to the lead wire 8 to be separated from the device.

Other explanations are the same as those explained with reference to Fig. 3(c), and therefore explanations thereof are omitted.

Similarly to Fig. 4(a), Fig. 13(a) illustrates an example in which the light source holders 4 are installed in the tube wall 42 of the vacuum tip 2, on the tube-body outer surface 43, and on the tube-body inner surface 44.

As illustrated in Fig. 13(b), the oral suction device allows the attachment 3 and the light source unit 9 to be separated from the vacuum tip 2.

Other explanations are the same as those explained with reference to Fig. 4(a), and therefore explanations thereof are omitted.

Also in the present embodiment, similarly to the first embodiment, the oral suction device may be configured to allow the lead wire 8 provided in the light source holder 4 installed in the vacuum tip 2 and electrically connected to the light source 7 and the lead wire 8 electrically connected to the power supply PS to be in contact with each other via electrodes thereof or separated from each other (Figs. 14).

The difference from the first embodiment is in that components related to electrodes are provided on the attachment 3, not on the vacuum hose 1. Therefore, components referred to as the hose-side electrodes 14 in the first embodiment are referred to as the attachment-side electrodes 34.

Further, similarly to the first embodiment, the oral suction device according to the present embodiment may include the controller 62 including a switch that turns on and off a power supply of the light source 7, the housing 61 accommodating the controller 62, and the switch operating unit 63. Explanations of these constituent elements are identical to those of the first embodiment, and therefore explanations thereof are omitted. The oral suction device in the present embodiment is the same as that in the first embodiment in being able to include the controller 62, the housing 61, and the switch operating unit 63 without including the attachment-side electrodes 14, the tip-side electrodes 24, the connection box 51, and the like described above.

The difference from the first embodiment is in that these components are provided on the outer surface of the attachment 3, not on the vacuum hose 1 (Figs. 14).

In any configuration, the lead wire 8 and the light source 7 connected thereto can be attached to and detached from the vacuum tip 2 (Fig. 14(c)).

Further, the present embodiment is identical to the first embodiment in that the power supply may be a battery or the rechargeable battery 64 and may include the socket 65 (Fig. 14(a)). Explanations of these constituent elements are also identical to those of the first embodiment, and therefore explanations thereof are omitted.

The present embodiment is identical to the first embodiment in that the valve 81 can be installed at the opening 5 of the light source holder 4 and, in a case where the light source holder 4 is not formed integrally with the vacuum tip 2, the light source holder 4 can be attached to the tube-body outer surface 43 of the vacuum tip 2 by using the holder clip 82 or 87 or the holder tape 85. Therefore, descriptions of these configurations are omitted.

As illustrated in Figs. 15, the oral suction devices in the first and second embodiments can further include a sheet 70 in the form of a thin plate where the light source 7 and the lead wire 8 are arranged.

A schematic perspective view of the sheet 70 is illustrated in Fig. 15(b), and the oral suction device including the light source holder 4 to which that sheet 70 is to be inserted is illustrated in Fig. 15(a). Similarly to Fig. 1(a), Fig. 15(a) illustrates a longitudinal section appearing when the vacuum tip 2 is cut in almost half along the longitudinal direction thereof. Although Figs. 15 illustrate an example in which the light source holder 4 is provided on the tube-body inner surface 44 of the vacuum tip 2, the light source holder 4 can be provided on the tube-body outer surface 43 or within the tube wall 42.

It is preferable that the internal shape of the light source holder 4 is one size larger than the outer shape of the plate-shaped sheet 70. That is, it is preferable that the internal shape of the light source holder 4 is also flat. In addition, it is preferable that the material and the shape of the light source holder 4 and the sheet 70 are designed so as to prevent fall of the sheet 70 from the light source holder 4 unless force is applied to pull out the sheet 70. Further, the sheet 70 is required to have the strength suitable for being attached to and detached from the light source holder 4 through the opening 5. The material for the sheet 70 is preferably a resin.

The light source 7 and the lead wire 8 are arranged on or in the sheet 70. In Fig. 15(b), the lead wire 8 embedded in the sheet 70 is connected to a terminal for supplying power provided in the light source 7 arranged on the surface of the sheet 70, within the sheet. The lead wire 8 may be arranged on the surface of the sheet 70 without being embedded in the sheet 70.

The lead wire 8 arranged on or in the sheet 70 exits to outside of the sheet 70, passes through the inside of a cable 69, and is connected to a plug 66. By insertion of the plug 66 to a plug receiver that is installed in the vicinity of the proximal end of the vacuum hose 1 and that allows the plug to be inserted thereto, the power supply PS (not illustrated) and the light source 7 are electrically connected to each other. To prevent the lead wire 8 from being exposed when the lead wire 8 exits from the inside of the sheet 70 to the cable 69, a portion around a portion of contact between one end of the cable 69 and the sheet 70 may be covered with a resin cover 68, for example.

Although the number of the light sources 7 provided on the sheet 70 is one or more, it is preferable that the number is such a number that the light amount required for illumination of the oral cavity is obtained. A plurality of sheets 70 provided with different numbers of light sources 7 may be prepared, and one of the sheets 70 which is to be used may be selected each time of use.

When being inserted into the light source holder 4, the sheet 70 can be fit and inserted in such a manner that the light source 7 arranged on the sheet 70 faces to outside or inside of the tube body of the vacuum tip 2. However, in a case where illumination is so bright for a user of the oral suction device, for example, a dentist, it is preferable that the sheet 70 is inserted to make the light source 7 arranged on the sheet 70 face to inside of the tube body. Using a light-transmitting member for the light source holder 4 and the vacuum tip 2 enables light from the light source 7 to illuminate a work object.

Connection between the vacuum tip 2 and the vacuum hose 1, insertion of the plug 66 into the plug receiver 67, and insertion of the sheet 70 to the light source holder 4 are performed in a desired order to connect the components, so as to assemble the oral suction device.

In the example of Figs. 15, power supplied to the light source 7 can be adjusted by rotating the switch operating unit 63.

Although Figs. 15 illustrate an example in which the controller 62, the switch operating unit 63, and the plug receiver 67 are provided on the vacuum hose 1, the oral suction device may include the attachment 3, and those components may be provided on the attachment 3.

In this case, connection between the vacuum hose 1 and the attachment 3, connection between the attachment 3 and the vacuum tip 2, insertion of the plug 66 into the plug receiver 67, and insertion of the sheet 70 to the light source holder 4 are performed in a desired order to connect the components, so as to assemble the oral suction device.

While the present invention has been described with reference to the drawings illustrating some embodiments of the present invention, a mode in which one or plural configurations described in one embodiment are combined with one or plural configurations described in another embodiment is included in one of the embodiments of the present invention, as long as the mode meets the spirit of the present invention. Further, a variety of modifications may be made as long as the modifications meet the spirit of the present invention and the modifications are also included in the embodiments of the present invention.

### Reference Signs List

1 vacuum hose
2 vacuum tip
3 attachment
4 light source holder
5 opening
6 branching portion
7 light source
8 lead wire
9 light source unit
10 first lead wire
11 hose distal end portion
12 hose proximal end portion
13 stopper
14 hose-side electrode
15 within tube wall
16 hose branching portion
17 hole
18 hole
19 hole
20 second lead wire
21 tip distal end portion
22 tip proximal end portion
23 opening plate
24 tip-side electrode
31 attachment distal end portion
32 attachment proximal end portion
33 step
34 attachment-side electrode
35 within tube wall
36 attachment branching portion
41 suction port
42 within tube wall
43 tube-body outer surface
44 tube-body inner surface
45 work surface
46 non-work surface
51 connection box
52 elastic body
53 plate
61 housing
62 controller
63 operating unit
64 battery or rechargeable battery
65 socket
66 plug
67 plug receiver
68 cover
69 cable
70 sheet
71 connector
81 valve
82 holder clip
83 hole
84 hole
85 holder tape
86 joint surface
87 holder clip
J joint portion
PS power supply

## Claims

1. An oral suction device comprising:
a vacuum hose connected to a suction source;
a vacuum tip having a tube body that has a proximal end connectable to a distal end of the vacuum hose and a distal end as a suction port;
a bag-shaped light source holder provided on a tube-body outer surface, on a tube-body inner surface, in a tube wall of the vacuum tip, or at locations corresponding to a combination thereof, extending along a longitudinal direction of the vacuum tip, and having an opening at an end closer to the proximal end of the vacuum tip;
a light source as illumination in an oral cavity; and
a power-supply lead wire connected to the light source, wherein
the light source and a portion of the lead wire are able to be inserted into and taken out of the light source holder through the opening.

2. The oral suction device according to claim 1, wherein one or more of the light source holders are provided on the tube-body outer surface of the vacuum tip.

3. The oral suction device according to claim 2, wherein at least one of the light source holders of the vacuum tip includes a branching portion arranged near the opening and extending away from the tube-body outer surface of the vacuum tip.

4. The oral suction device according to claim 2, wherein the light source holder includes a C-shaped holder clip fitting to an outer peripheral surface of the vacuum tip.

5. The oral suction device according to claim 2, further comprising an approximately C-shaped holder clip configured to surround the vacuum tip and the light source holder positioned on or in the vacuum tip.

6. The oral suction device according to any one of claims 1 to **3,** wherein a valve is provided at the opening of the light source holder.

7. The oral suction device according to any one of claims 1 to **3,** further comprising:
a hose-side electrode provided in the vicinity of the distal end of the vacuum hose; and
a tip-side electrode provided in the opening of the light source holder for receiving power from the hose-side electrode, wherein
the lead wire is configured by a first lead wire electrically connecting a power supply and the hose-side electrode to each other and a second lead wire electrically connecting the light source and the tip-side electrode to each other,
a portion of the lead wire which is to be inserted into and taken out of the light source holder is the second lead wire, and
in a state where connection between the vacuum tip and the vacuum hose has been completed, the tip-side electrode and the hose-side electrode are positioned to be in contact with each other and become electrically continuous.

8. The oral suction device according to claim 1, further comprising an attachment having a tube body that has a proximal end connectable to the distal end of the vacuum hose and a distal end connectable to the proximal end of the vacuum tip.

9. The oral suction device according to claim 8, wherein one or more of the light source holders are provided on the tube-body outer surface of the vacuum tip.

10. The oral suction device according to claim 9, wherein at least one of the light source holders of the vacuum tip includes a branching portion arranged near the opening and extending away from the tube-body outer surface of the vacuum tip.

11. The oral suction device according to claim 9, wherein the light source holder includes a C-shaped holder clip fitting to an outer peripheral surface of the vacuum tip, and by fitting the holder clip to the vacuum tip, the light source holder is provided on the outer peripheral surface of the vacuum tip.

12. The oral suction device according to claim 9, comprising a holder clip having an inner frame with a shape obtained by cutting a portion of an annular shape that fits to an outer frame formed by the vacuum tip and the light source holder positioned on or in the vacuum tip, wherein
by fitting the light source holder and the vacuum tip through the cut portion, the light source holder is provided on the outer peripheral surface of the vacuum tip.

13. The oral suction device according to any one of claims 8 to 10, wherein a valve is provided at the opening of the light source holder.

14. The oral suction device according to any one of claims 8 to 10, further comprising:
an attachment-side electrode provided in the vicinity of the distal end of the attachment; and
a tip-side electrode provided in the opening of the light source holder for receiving power from the attachment-side electrode, wherein
the lead wire is configured by a first lead wire electrically connecting a power supply and the attachment-side electrode to each other and a second lead wire electrically connecting the light source and the tip-side electrode to each other,
a portion of the lead wire which is to be inserted into and taken out of the light source holder is the second lead wire, and
in a state where connection between the vacuum tip and the attachment has been completed, the tip-side electrode and the attachment-side electrode are positioned to be in contact with each other and become electrically continuous.

15. The oral suction device according to claim 1 or 8, further comprising a plate-shaped sheet where the light source and the lead wire are arranged, wherein
the light source holder has a bag shape to which the sheet is able to be inserted and fit.

16. The oral suction device according to claim 1, further comprising a plate-shaped sheet where the light source and the lead wire are arranged, wherein
the sheet is provided with a plug connected via a cable to the lead wire arranged thereon or therein,
the vacuum hose includes a plug receiver to which the plug is insertable, and
the light source holder has a bag shape to which the sheet is able to be inserted and fit.

17. The oral suction device according to claim 8, further comprising a plate-shaped sheet where the light source and the lead wire are arranged, wherein
the sheet is provided with a plug connected via a cable to the lead wire arranged thereon or therein,
the attachment includes a plug receiver to which the plug is insertable, and
the light source holder has a bag shape to which the sheet is able to be inserted and fit.
